# EUROPÄISCHE PATENTSCHRIFT

(11) **EP 0 697 948 B1**
(45) Veröffentlichungstag und Bekanntmachung des Hinweises auf die Patenterteilung: **16.07.1997**
(21) Anmeldenummer: 94916951.0
(22) Anmeldetag: 11.05.1994
(51) Int. Cl.: B29C 45/40, B22D 17/22

(54) **HÜLSENAUSWERFER**
SLEEVE EJECTOR
EJECTEUR DE DOUILLES

(30) Priorität: 13.05.1993 DE 4316029
(43) Veröffentlichungstag der Anmeldung: 28.02.1996
(73) Patentinhaber: KNARR, Rainer, D-95233 Helmbrechts (DE)
(72) Erfinder: KNARR, Rainer, D-95233 Helmbrechts (DE)
(86) Internationale Anmeldenummer: EP9401524
(87) Internationale Veröffentlichungsnummer: WO9426496

(56) Entgegenhaltungen:
- GB-A- 1 331 073
- US-A- 3 433 450
- US-A- 4 364 720
- PATENT ABSTRACTS OF JAPAN vol. 10, no. 286 (M-521) 27. September 1986 & JP,A,61 103 661 (NICHIEI KOZAI K.K.) 22. Mai 1986

## Beschreibung

Die Erfindung betrifft einen Hülsenauswerter zur Anwendung bei der Herstellung von Spritz- und Druckgießwerkzeugen sowie Stanzwerkzeugen.

Herkömmliche Hülsenauswerfer existieren nur als zylindrische Ausführungen mit einem stufenförmigen Übergang zwischen der Führung und der Freibohrung (siehe DE-B Vinzenz von Reiner, Druckguß, Carl Hanser Verlag. München, 1968 u.a.. Seiten 198 und 199, bzw. das Patent Abstracts of Japan vol. 10, no 286 (M-521)).

Aus Fertigungstechnischen Gründen ist die Länge der Führungszone und der Innendurchmesser nur begrenzt ausführbar.

Die Innenkontur kann nur als Durchmesser ausgeführt werden.

Der stufenartige Übergang bewirkt einen relativ hohen Verschleiß an den feststehenden Stiften und Hülsenauswerfern durch die Bewegung über diese Kante.

Bei ständiger Funktion der Hülse wird oft der Kopf im hinteren Bereich durch eine sprunghafte Krafteinwirkung (versetztes Gleiten über der Kante) abgeschert.

Sonderausführungen in Bezug auf den Innendurchmesser und entsprechende Führungslängen sind nur begrenzt herstellbar.

Abweichende geometrische Konturen sind nicht herstellbar.

Ziel der vorliegenden Erfindung ist, die Nachteile im Stand der Technik weitgehendst zu vermeiden. Diese Aufgabe wird gelöst durch die kennzeichnenden Merkmale des Anspruches 1, die Unteransprüche betreffen weitere Ausgestaltungen des Hülsenauswerfers nach Anspruch 1.

Die Führungszone des neuartigen Hülsenauswerfers wird ohne einen stufenartigen Übergang ausgeführt, d.h. die Innenkontur läuft ausschließlich konisch ineinander und wirkt einem vorzeitigen Verschleiß entgegen.

Der konisch verlaufende Übergang im Innenbereich muß entsprechend der Größe und Länge des Hülsenauswerfers im Verhältnis der Wandstärke gezielt aufeinander abgestimmt werden, um eine höchstmögliche Stabilität des Hülsenauswerfers zu erreichen.

Erfindungsgemäß sind variable Führungslängen des Hülsenauswerfers, abgestimmt auf den jeweiligen Einsatzfall, jederzeit möglich.

Die dadurch erreichbare höhere Standzeit der Hülsenauswerter führt damit zu mehr Produktionssicherheit.

Bei einer weiteren vorteilhaften Ausführungsform des erfindungsgemäßen Hülsenauswerfers beträgt der Winkel der Freimachung 1° oder weniger. Vorteil hierdurch sind die verbesserten Führungs- und Gleiteigenschaften und eine wesentlich höhere Standzeit.

Desweiteren ist es durch ein geeignetes Herstellungsverfahren möglich, beliebige vom Kreisquerschnitt abweichende Konturen des Hülsenauswerfers in Bezug auf den Außen- bzw. Innendurchmesser in größerer Vielfalt herzustellen. Beispielweise sind neben einen jeweils angepaßten runden Querschnitt auch eckige Querschnitte etc. realisierbar. Es wird damit eine größere Flexibilität in der Anwendung durch diese Konturenvielfalt erzielt.

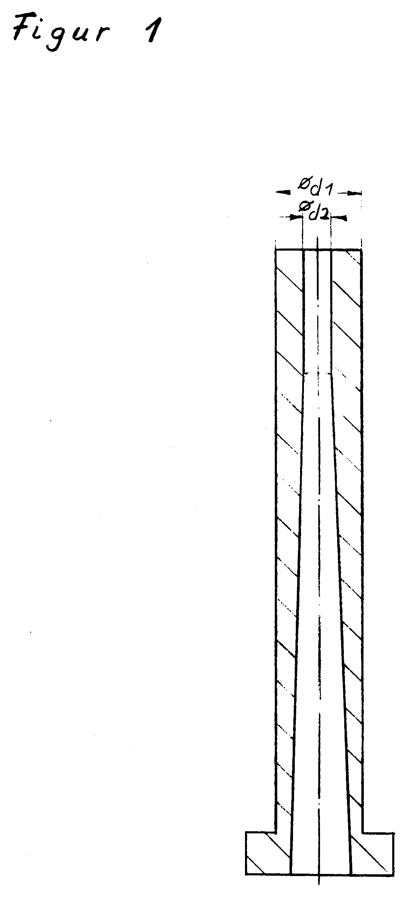

Die Erfindung wird im Folgenden anhand eines Ausführungsbeispieles näher erläutert. Es zeigen
**Figur 1:** In Figur 1 ist ein Erfindungsgemäßes Ausführungsbeispiel des Hülsenauswerfers.
   Dieser besitzt einen Äußeren bzw. Inneren Durchmesser mit einer konisch verlaufenden Führungszone.
   Er kann in Bezug auf den Innen bzw. Außendurchmesser abweichende geometrische Formen aufweisen. Auch die Kopfgestaltung kann im Hinblick auf die Konturengeometrie entsprechend abweichend ausgeführt sein. (nicht dargestellt wegen der Konturenvielfalt).

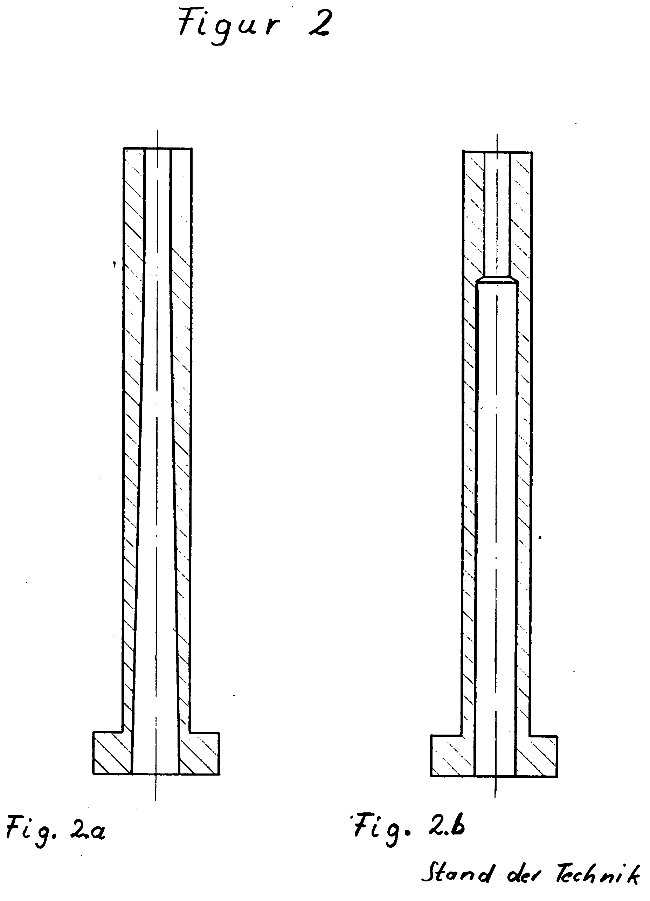

**Figur 2:** In Figur 2 ist eine Gegenüberstellung eines herkömmlichen Hülsenauswerfers (Fig.2.b,) mit dem erfindungsgemäßen Hülsenauswerfer (Fig.2.a.).
   Der Unterschied liegt im wesentlichen in der neuartig gestalteten Führungszone, welche von der Freimachung her auf der ganzen Länge stufenlos und konisch ineinander übergehend ausgeführt ist.
**Figur 3:** In Figur 3 ist eine Funktionsdarstellung in der herkömmlichen bzw. in einer erfindungsgemäßen Ausführung des Hülsenauswerfers.

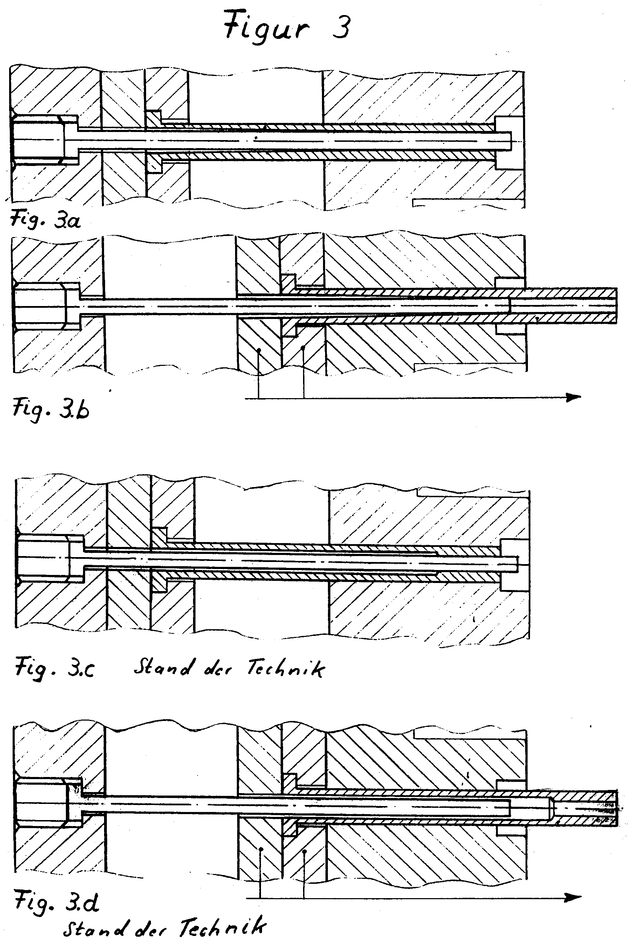

   In der Fig.3.a, und Fig.3.c, wird die Ausgangsfunktion der Hülsenauswerfer dargestellt (Ausstoßfunktion noch nicht getätigt).
   In der Fig.3.b, und Fig.3.d, wird die Lage der Hülsenauswerfer gezeigt, welche welche beim Ausstoßen des Teiles erreicht wird.
   Hierbei kann man deutlich den Unterschied erkennen, daß beim erfindungsgemäßen Hülsenauswerfer bei der ausgeführten Bewegung nach rechts der abrupte Übergang zwischen dem feststehenden Stift und es beweglichen Hülsenauswerfers in der Führungszone ausgeschloßen ist.
   Dadurch verhindert man einen vorzeitigen Verschleiß an den Stirnkanten des festdes feststehenden Stiftes und Hülsenauswerfers, und erreicht dadurch eine wesentlich höhere Standzeit sowie mehr Produktionssicherheit.

## Patentansprüche

1. Hülsenauswerfer, zur Anwendung bei der Herstellung von Spritz- und Druckgießwerkzeugen sowie Stanzwerkzeugen,
dadurch gekennzeichnet,
daß innerhalb des Hülsenauswerfers der Übergang von der Freimachung in die Führungszone stufenlos und konisch ausgestaltet ist, wobei über die gesamte Länge des Innenquerschnittes der Freimachung die gleiche Konizität besteht.

2. Hülsenauswerfer nach Anspruch 1,
dadurch gekennzeichnet,
daß der innere Querschnitt der Hülsen unterschiedliche vom Kreisquerschnitt abweichende geometrische Formen aufweist.

3. Hülsenauswerfer nach Anspruch 1 oder 2,
dadurch gekennzeichnet,
daß der äußere Querschnitt der Hülsen unterschiedliche vom Kreisquerschnitt abweichende Formen aufweist.

4. Hülsenauswerfer nach Anspruch 1 oder 2 oder 3,
dadurch gekennzeichnet,
daß der Winkel der Freimachung kleiner oder gleich 1° beträgt.

## Claims

1. A shell ejector for use in the production of injection moulding and pressure die casting tools and also cutting dies,
**characterised in that** inside the shell ejector the transition from the clearance into the guide zone is continuously and conically designed, with there being the same conical shape over the entire length of the internal cross section of the clearance.

2. A shell ejector according to Claim 1,
**characterised in that** the internal cross section of the shells has different geometric shapes varying from the circular cross section.

3. A shell ejector according to Claim 1 or 2,
**characterised in that** the external cross section of the shells has different shapes varying from the circular cross section.

4. A shell ejector according to Claim 1 or 2 or 3,
**characterised in that** the angle of the clearance is smaller than or equal to 1°.

## Revendications

1. Éjecteur de douilles destiné à être utilisé dans la fabrication d'outils de moulage par injection et de coulée sous pression ainsi que d'outils de découpage,
**caractérisé en ce**
qu'à l'intérieur de l'éjecteur de douilles, la jonction de l'alésage de dégagement à la zone de guidage est agencée de manière à être progressive et conique, la même conicité étant présente sur toute la longueur de la section, transversale intérieure de l'alésage de dégagement.

2. Éjecteur de douilles selon la revendication 1,
**caractérisé en ce**
que la section transversale intérieure des douilles possède des formes géométriques différentes, qui s'écartent de la section transversale circulaire.

3. Éjecteur de douilles selon la revendication 1 ou 2,
**caractérisé en ce**
que la section transversale extérieure des douilles possède des formes différentes, qui s'écartent de la section transversale circulaire.

4. Éjecteur de douilles selon la revendication 1 ou 2 ou 3,
**caractérisé en ce**
que l'angle de l'alésage de dégagement est inférieur ou égal à 1°.
